# EUROPEAN PATENT SPECIFICATION

(11) **EP 1 471 087 B1**
(45) Date of publication and mention of the grant of the patent: **21.02.2007**
(21) Application number: 04251563.5
(22) Date of filing: 18.03.2004
(51) Int. Cl.: C08G 18/12, C08G 18/32, C08G 18/40, C08G 18/66, C09J 175/04

(54) **Moisture-curing, hot-melt polyurethane adhesive**
Feuchtigkeitshärtender Polyurethan-Heisschmelzkleber
Adhesif thermofusible de polyurethane durcissant a l'humidite

(30) Priority: 22.04.2003 US 420392
(43) Date of publication of application: 27.10.2004
(73) Proprietor: WORTHEN INDUSTRIES INC., Nashua, NH 03060 (US)
(72) Inventor: Rosin, Michael L., Milford, NH 03055 (US); Willwerth, Francis G., III, Acton, MA 010720 (US); Theriault, Nathan A., Nashua, NH 03060 (US)
(74) Representative: Bankes, Stephen Charles Digby

(56) References cited:
- WO-A-92/07015
- US-A- 5 618 904
- US-A- 5 965 662
- US-A- 6 136 136
- US-B1- 6 221 978

## Description

The present invention relates to a selected moisture-curing, hot-melt polyurethane adhesive, its production and its use in footwear construction. In particular, this invention relates to a selected uncured moisture-curing, hot-melt polyurethane adhesive composition having at least one aromatic chain extender as a component.

A moisture-curing, polyurethane hot-melt adhesive is an adhesive largely free of solvents and having urethane groups. The adhesive is solid at room temperature and is applied to a substrate or substrates in the form of a melt. It physically binds not only by cooling but also by chemical reaction of still present isocyanate groups with water. It is only subsequent to such chemical curing with the increase in molecular size that the adhesive receives its final characteristics.

Hot-melt adhesives are attractive from the viewpoint of speed of set up and ease of application. Hot-melt adhesives are widely used in the footwear industry. One important requirement in providing satisfactory adhesive bonds is that the applied adhesive composition must have sufficient fluidity to enable it to adequately wet the substrate to which it is applied. In addition, the composition should also effect at least some penetration of fibrous substrates. Further, it is also important that the composition develop a tough solid bond. The aforementioned requirements are particularly important in adhesively bonding shoe soles to shoe uppers where the finished product is subject to variations of stress under different conditions of use.

The desirable characteristics for an adhesive composition for application for sole attaching purposes include the following: The adhesive composition should be capable of application in fluid form at a temperature which is sufficiently low such that the shoemaking materials are not adversely effected. The adhesive composition should have at such application temperatures, good heat resistance, viscosity and flow characteristics which enable it to properly wet surfaces to which it is applied and preferably also to penetrate fibrous materials, for example, synthetic materials to establish good initial adhesive bonds to the materials. Coatings of the adhesive on the materials should have good green strength, creep resistance, and harden adequately within a few minutes to provide at least a non-tacky surface and preferably a solid, form-retaining, non-tacky coating on the material to the extent that either soles or shoe uppers or both coated with the adhesive compositions may be handled and stored when cooled without sticking together and without significantly disturbing the applied layers of adhesive compositions. It is also desirable that the adhesive union between the sole and shoe upper should initially be sufficiently strong to avoid springing of the sole edges from the shoe upper during handling and storage immediately at the sole pressing, i.e., have good green strength and creep resistance and should be or become adequately cured to withstand normal conditions of use of the shoe.

Particularly, when using a moisture-curable hot-melt polyurethane adhesive, it is desirable that coatings of the adhesive composition on the shoe quickly cure after application to bring about conversion of the adhesive to a tough solid condition. Further, when using a moisture-curable, hot-melt, polyurethane composition, curing should occur at normal ambient conditions of sole storage, (i.e., approximately between 15°C and 30°C and relative humidity of not less than approximately 10%). Lastly, the cured adhesive composition should have good flexibility at low temperatures and provide a strong bond to a variety of materials, such as those employed in the shoe industry.

Many of the foregoing drawbacks were discussed and were to a considerable extent overcome by the teachings of U.S. Patent Nos. 5,599,895 and 6,136,136.

However, several drawbacks still have not been sufficiently overcome by those adhesive products taught by these patents. Specifically, these patented adhesives do not have high enough green strength along with sufficient creep resistance to allow the shoe sole to be attached to the shoe upper without distortion. Furthermore, these patented adhesives do not act in a commercially acceptable timeframe. And further, these patented adhesives do not perform adequately with vinyl substrates common in the shoe industry. Until the present invention, polyurethane adhesives have not possessed sufficient green strength, along with sufficient creep resistance, to allow shoes to be assembled in a timely manner for all types of substrates including vinyl without numerous defects, high level re-work or rejects. The present invention provides a solution for overcoming these recognized problems.

The following other references may be also relevant to the present invention:
U.S. Patent No. 5,115,073; Moisture Curing Hot Melt Adhesives, Dr. H.F. Huber and Dr. H.-W. Losensley, 16th Munich Adhesive and Finishing Seminar (1991) - (Separate Print 45.07.162e); Hot Urethanes, Renee von Schijndel and Eric Appleman, Adhesive Age (December 2001); The Building Block System for Moisture Curable Hot Melt Adhesives and Sealants (Degussa Corporation Technical Bulletin); Rucoflex Product Bulletin (Ruco Polymer Technical Bulletins); and The Capa Range of Products (Solvay Caprotactones, Cheshire, UK Technical Bulletin).

Accordingly, one aspect of the present invention is directed to an uncured, moisture-curing, hot-melt polyurethane adhesive composition as recited in claim 1.

The uncured adhesive composition typically exhibits a green peel strength of at least 876N/m (5 pounds per linear inch, pli) at 1 minute and at least 2102 N/m (12 pounds per linear inch, pli) at 5 minutes when measured in accordance with Test QC-0220 and a creep resistance of less than 7 millimeters, when measured in accordance with the Creep Test.

Another aspect of the present invention is directed to a method of producing a moisture-curing hot-melt polyurethane adhesive composition according to the invention, comprising the steps of :
(a) heating (1) a hydroxyl-containing component selected from the group consisting of one or more polylactones, one or more polyether polyols, or combinations thereof; (2) at least one crystalline polyester, (3) at least one amorphous polyester and (4) at least one aromatic chain extender to form a mixture; and
(b) reacting (5) a polyisocyanate with the mixture to produce an uncured moisture-curing hot-melt polyurethane adhesive composition, the uncured adhesive composition exhibiting a green peel strength of at least 876 N/m (5 pli) at 1 minute and at least 2102 N/m (12 pli) at 5 minutes when tested in accordance with Test QC-0220 and a creep resistance of less than 7 millimeters when measured in accordance with the Creep Test.

Still another aspect of the present invention is directed to a method for bonding a first substrate to a second substrate comprising:
(a) optionally, treating at least a portion of the first substrate to form a treated first substrate;
(b) heating an adhesive-forming composition according to the invention to form a molten adhesive composition;
(c) coating at least a portion of the treated first substrate with the molten adhesive composition to form a coated substrate;
(d) optionally, heating the coated substrate; and
(e) contacting the coated first substrate with a second substrate to bond the first substrate to the second substrate.

The term "moisture-curing" as used in the present specification and claims in conjunction with polyurethane adhesive compositions means that those compositions at least partially cure into an effective adhesive composition by the reaction of moisture (e.g., water in the atmosphere or in the substrate) with isocyanate groups in the uncured adhesive composition. The present invention encompasses the use of any suitable conditions that may effect this curing reaction.

The term "hot-melt" as used in the present specification and claims in conjunction with polyurethane adhesive compositions means any composition that is solid at normal ambient temperatures, but may be heated into a molten state (a melt) before application onto one or more substrates that are to be bound together. The present invention encompasses polyurethane adhesive compositions that are made by any suitable hot-melt techniques.

The aromatic chain extender is an aromatic moiety which functions to increase the tensile strength and retention of strength at elevated temperatures. Such retention of strength is responsible for the increased green strength after the adhesive is heated to form a bond. The bond line will maintain significant heat after activation and the aromatic chain extender yields higher strength at elevated temperatures thus exhibiting improved green strength.

The aromatic chain extenders are secondary aromatic diamines. Preferred components include the following:
4,4'- bis(sec-butylamino) diphenylmethane (Unilink 4200)(CAS# 5285-60-9)
N,N'-di-sec-butyl-p-phenylenediamine (Unilink 4100)(CAS# 101-96-2)
N,N'-bis-(1,4-dimethylpentyl)-p-phenylenediamine (Unilink 7100)(CAS# 3081-1409)

One preferred secondary aromatic diamine Unilink 4200, available from UOP. Preferably, the invention includes a moisture-curing, hot-melt polyurethane adhesive composition that is a reaction product of reactants comprising a hydroxyl-containing component selected from one or more polylactones, one or more polyether polyols, or combinations thereof, in an amount of from 10% by weight to 50% by weight; an aromatic chain extender in an amount of from 1% by weight to 15% by weight; a crystalline polyester in an amount of from about 5% by weight to about 30% by weight; an amorphous polyester in an amount of from about 10% by weight to about 50% by weight; and a polyisocyanate in an amount from about 10% by weight to about 40% by weight, based on the total weight of the adhesive composition. The adhesive composition generally exhibits a minimum green peel strength of 876N/m (5 pli) @ 1 min. and 2102 N/m (12 pli) @ 5 mins. when tested in accordance with Test QC-0220, a green strength test described herein, and preferably also has an adhesive strength great enough to tear the SBR (styrene/butadiene/rubber) substrate when left overnight at room temperature and 50% R.H (relative humidity). The viscosity of the adhesive is about 15,000 ± 7,500 cps when tested @ 177°C (350°F) using a Brookfield Thermosel Model DV-E viscometer using a speed of 5 rpm and a #27 spindle. Also, the adhesive compositions of the present invention exhibit a creep resistance level below about 7 millimeters when measured according to the Creep Test, which is described herein.

The green strength and adhesive strength of the adhesive compositions were the result of the reacting the hydroxyl-containing component, aromatic chain extender and the polyesters with the polyisocyanate in the above specified amounts. Most significantly, it was discovered that reacting the hydroxyl-containing component, aromatic chain extender, polyesters with the polyisocyanate in the above specified weight ranges may effect the production of the adhesive compositions exhibiting the above characteristics, namely a green peel strength of 876 N/m (5 pli) @ 1 min. when tested in accordance with Test QC-0220.

In a preferred embodiment aspect of the invention, the polylactones are low molecular weight polylactones. A low molecular weight polylactone refers to a polylactone comprised of caprolactone and short chain glycol and having a molecular weight of 250 to 500.

The polylactone component from which the adhesive composition is formed is preferably liquid @ 30° C.

Polyethers are understood to comprise a polymer having 2 OH groups and preferably include those of the general formula HO(-R-O)ₘH, wherein R is a hydrocarbon residue having from 2 to 4 carbon atoms. Similarly, polyether copolymers including both block copolymers and random copolymers may be used. Suitable polyethers include polyethylene glycol, polytetramethylene glycol and poly(oxypropylene) glycol. It is contemplated that one type of polyether or combinations of different polyethers may be employed in the production of the adhesives compounds. Preferably, they have an average molecular weight (M_{w}) between about 250 and 600 as determined by end-group analysis.

Crystalline polyesters are solid polyesters at room temperature with melting points between about 40°C to about 125°C with the polyesters or resulting polyurethanes having glass transition temperatures below 0°C. Preferred materials are manufactured by Degussa and designated as the Dynacoll 7300 series of copolyesters. Similar polyesters are manufactured by Ruco Polymers and are designated as Rucoflex polyesters.

Amorphous polyesters are solid materials with glass transition temperatures above 0°C. Preferred materials are manufactured by Degussa and are designated as the Dynacoll 7100 series of copolyesters. Other preferred amorphous polyesters are manufactured by Ruco Polymers and are designated as Rucoflex polyesters.

The polyisocyanate component from which the adhesive composition is formed can include aromatic polyisocyanates, such as 4,4'-diphenylmethane diisocyanate, 2,4'-diphenylmethane diisocyanate and mixtures thereof, toluene diisocyanate, m-tetramethylxylene diisocyanate: aliphatic isocyanates, such as 1,6 hexamethylene diisocyanate, (2,2,4 and 2,4,4)-trimethylhexamethylene diisocyanate; cycloaliphatic isocyanates, such as 3-isocyanatomethyl-3,5,5-trimethylcyclohexyl isocyanate and dicyclohexylmethane 4,4'-diisocyanate.

In yet another aspect of the invention, the adhesive composition is a reaction product of reactants comprising a low molecular weight caprolactone in an amount of about 26.6 % by weight, bis-(hydroxyethyl) ether of resorcinol (HER-HP) in an amount of about 4.0% by weight, a crystalline polyester in an amount of about 6.4% by weight, an amorphous polyester in an amount of about 32.0% by weight and a polyisocyanate in an amount of about 31.0% by weight, based on the total weight of the adhesive composition.

In another preferred aspect of the invention, the adhesive composition is a reaction product of reactants comprising a low molecular weight caprolactone in an amount of about 27.0% by weight, bis-(hydroxyethyl) ether of hydroquinone (HQEE) in an amount of about 4.0% by weight, a crystalline polyester in an amount of about 6.4% by weight, an amorphous polyester in an amount of about 32.0% by weight and a polyisocyanate in an amount of about 30.6% by weight, based on the total weight of the adhesive composition.

In another preferred aspect of the invention, the adhesive composition is a reaction product of reactants comprising a low molecular weight caprolactone in an amount of about 25.0% weight, a crystalline polyester in an amount of about 6.0% weight, an amorphous polyester in an amount of about 33.0% weight, an aromatic chain extender in an amount of about 6.0% weight and a diisocyanate in an amount of about 30.0% weight, based on the total weight of the adhesive composition.

In yet another aspect of the invention, the adhesive composition is a reactant product of reactants comprising a low molecular weight caprolactone, a secondary aromatic diamine, and an isocyanate as well as a crystalline polyester and an amorphous polyester.

The adhesive compositions of the invention may further include fillers, tackifiers, U.V. stabilizers, fluorescent whiteners, defoamers, pigments, wetting agents and surfactants, viscosity-modifying agents, and antioxidants, moisture-scavengers and the like.

The adhesive composition can have a ratio of reactive NCO groups to reactive OH groups from 1.1 / 1.0 to 2.0 / 1.0, preferably 1.3 - 1.5 / 1.0.

The preparation of the adhesive composition can include the use of catalysts, e.g., dibutyltin dilaurate or dibutyltin dilaurylmercaptide, which may be present in the adhesive composition in an amount of from 0.001% by weight to 0.1% by weight, preferably about .01% by weight, based upon the total weight of the composition.

In addition, the preparation of the adhesive composition can include the use of stabilizers, e.g., benzoyl chloride, phosphoric acid, acetic acid and p-toluenesulfonyl isocyanate or combinations thereof. In one aspect, .001% to .01% of H₃PO₄ (85%) by weight, preferably about .0018% by weight, can be present in the adhesive composition based upon the total weight of the composition. In addition to phosphoric acid, 0.01% to 0.5% of p-toluenesulfonyl isocyanate, preferably about 0.10% by weight, can be present in the adhesive composition based upon the total weight of the composition.

The invention also includes a method of producing a polyurethane adhesive composition comprising heating a hydroxyl-containing component, a crystalline polyester, an amorphous polyester and an aromatic chain extender to form a mixture and reacting a polyisocyanate with the mixture.

In another preferred aspect, the invention includes a method of bonding a first substrate to a second substrate. The method comprises optionally treating a first substrate by roughing, priming, chlorinating, solvent washing, and the like, the first substrate. The adhesive composition is heated to form a molten adhesive and the molten adhesive is coated to the first substrate to form a coated substrate. The coated substrate is then optionally heated and then contacted to a second substrate, e.g., by pressing, to bond the first substrate to the second substrate. In one aspect of the invention, the first substrate is a shoe sole and the second substrate is a shoe upper. In another aspect of the invention, the first substrate is a shoe upper and the second substrate is a shoe sole. The shoe uppers can be constructed from leather or synthetic fabrics and the sole can be constructed from leather, rubber, or synthetic materials, such as thermoplastics.

In one preferred aspect of the invention, the bonded first and second substrate forms an article of footwear.

In yet another preferred aspect, the article of footwear comprises an upper and sole bonded together with an adhesive comprising the reaction product of reactants including a polylactone in an amount within the range of between about 50% to 10% by weight, an aromatic chain extender in an amount within the range of between about 15.0% to 1.0% by weight, a crystalline polyester in an amount within the range of between about 30% to 5% by weight, an amorphous polyester in an amount within the range of between about 50% to 10% by weight and an isocyanate present in an amount within the range of between about 40% to 10% by weight, based on the total weight of the composition. The adhesive composition used to bond the upper and the sole exhibits a green peel strength of at least 876 N/m (5 pli) @ 1 minute and 2102 N/m (12 pli) @ 5 minutes when tested in accordance with QC-0220.

In an alternative preferred embodiment of the invention, the adhesive used to bond the upper and the sole of the footwear article is a composition being the reaction product of reactants comprising a polyether in an amount within the range of between 50% to 10% by weight, an aromatic chain extender in an amount within the range of between 15.0% to 1.0% by weight, a crystalline polyester in an amount within the range of between 30% to 5% by weight, an amorphous polyester in an amount within the range of 50% to 10% by weight and an isocyanate present in an amount within the range of 40% to 10% by weight, based on the total weight of the composition. The adhesive composition exhibits a green peel strength of at least 876 N/m (5 pli) @ 1 minute and 2102 N/m (12 pli) @ 5 minutes when tested in accordance with QC-0220.

Besides those aspects of the present invention drawn to bonding a first and second substrate together (e.g., shoe upper and a sole) by applying or coating the adhesive composition of the present invention to a surface of one of the two substrates and then contacting (e.g., pressing) the other substrate to that coated substrate to bond the substrates together, the present invention is also directed to other bonding techniques. For example, the adhesive of the present invention may be applied or coated to the surface of both substrates before they are contacted and bound together. Alternatively, the adhesive of the present invention may be applied to one substrate while another conventional adhesive composition may be applied to the other substrate before contacting and bonding together. Still further, the adhesive composition of the present invention may be applied or coated to the surface of one substrate along with another adhesive composition and then that coated substrate is contacted and bound together to a second substrate.

The present invention is further described in detail by means of the following Examples and Comparisons. All parts and percentages are by weight and all temperatures are degrees Celsius unless explicitly stated otherwise.

The present Examples and Comparisons are prepared using the following chemical ingredients:
¹Rucoflex™ XS-6012P-22 amorphous polyester with an OH# of 20.0 and an acid value of 2.0. A molecular weight of ~5,000 and a glass transition temperature of ~ 30°C and a viscosity of 2900 cps. @ 200°C. A product of Ruco Polymers.
²Rucoflex™S-1074-30 a crystalline hydroxyl terminated polyester with an OH# of ~30.0 and an acid value of #2.0. A molecular weight of 3,500, a melting point of ~65°C and a viscosity of ~2,000 cps @100°C. A product of Ruco Polymers.
³ Capa™ 2043, a 400 molecular weight polyester diol derived from □-caprolactone and 1,4 butanediol with a melting point of 0-10°C, an OH# 280 mg KOH/g and an acid value of <0.5 mg KOH/g. A Product of Solvay Interox Inc.
⁴ Unilink™ 4200 a secondary aromatic diamine CAS No. 5285-60-9, a product of UOP LLC of Des Plaines, IL.
⁵ Irganox™ B225, a 1 to 1 by weight mixture of tetrakis [methylene(3,5-di-tetr-butyl-4-hydroxyhydrocinnamate)] methane CAS No. 6683-19-8 and tris(2,4-di-tert-butylphenyl) phosphite CAS No. 31570-04-4, a product of Ciba-Geigy.
⁶ Mondur™ M (Fused or Flaked), 4,4'-diphenylmethane diisocyanate CAS No. 101-68-8, a product of Bayer Corp.
⁷ Fomrez™ UL-1, alkyltin mercaptide, a product of Witco Corporation.
⁸ p-Toluenesulfonyl isocyanate CAS No. 4083-64-1, a moisture scavenger, a product of of VanDeMark Inc., Lockport, NY.
⁹ PolyG®20-265 hydroxy-terminated poly(oxypropylene)glycol, CAS No. 25322-69-4, a product of Arch Chemicals Inc.
¹⁰ PolyG®HQEE hydroquinone di(beta-hydroxyethyl)ether CAS No. 104-38-1, a product of Arch Chemicals Inc.
¹¹HER-HP resorcinol di(beta-hydroxyethyl)ether CAS No. 102-40-9, a product of Indspec Chemical Corp.

### Example 1

To a 3L resin flask equipped with a stainless steel 3 blade agitator, Trubore bearing, thermocouple and a Firestone purge valve set up to vacuum and nitrogen the following ingredients were charged: 701.10 grams of an amorphous polyester ¹ (.0700 eq.), 151.71 grams of a crystalline polyester² (.0200 eq.) and 580.29 grams of a polylactone³ (.7100 eq.). 128.26 grams of a secondary aromatic diamine⁴ (0.2000 eq.) and 12.15 grams of a antioxidant blend ⁵ were now added at room temperature. The resin flask was agitated while being heated and purged with dry nitrogen. The flask was heated to 110°C under a vacuum of 0.01mm and maintained under vacuum for 1 hour after being flushed several times with dry nitrogen through the use of the Firestone valve. After approximately 1 hour, the vacuum was relieved under N₂ and 672.85 grams of a diisocyanate⁶ (1.3000 eq.) were added as a melt. An immediate exotherm was observed with the reaction temperature increasing from 110°C to 172°C in a time period of 2 minutes. The vacuum was restarted and maintained at 0.50 mm for 1 hour at a temperature of 180°C. The vacuum was relieved under N₂ and a sample was taken for %NCO. 0.225 grams of a catalyst⁷ and 2.25 grams of a stabilizer⁸ were then added and the vacuum restarted. The %NCO was found to be 2.065 when titrated with 0.1 N HCl against a 0.1N n-dibutyl amine standard. The reaction was maintained at a temperature of 180°C and a vacuum of 0.15mm for an additional 45 minutes. The vacuum was relieved under N₂ and the viscous, translucent, yellow red liquid was poured into 3 Pam aluminum caulking tubes and 2 pint paint cans for later use. The viscosity was measured using a Brookfield viscometer equipped with a thermocell using a #27 spindle at 177°C (350°F) and found to be 17,900 cps.

### Comparison 2

To a 3L resin flask equipped with a stainless steel 3 blade agitator, Trubore bearing, thermocouple and a Firestone purge valve set up to vacuum and nitrogen the following ingredients were charged: 673.93 grams of an amorphous polyester¹ (.0700 eq.), 135.97 grams of a crystalline polyester² (.0200 eq.) and 768.72 grams of a polyether⁹ (0.9100 eq.).12.15 grams of antioxidant blend⁵ were now added at room temperature. The resin was agitated while being heated and purged with dry nitrogen. The flask was heated to 120.1°C under a vacuum of 0.5mm and maintained under vacuum for 1 hour after being flushed several times with dry nitrogen through the use of a Firestone valve. After 1 hour, the vacuum was relieved under N₂ and 656.75 grams of a diisocyanate⁶ (1.3000 eq.) were added as a melt. An immediate exotherm was observed with the reaction temperature increasing from 113°C to 61.7°C in a time period of 17 minutes. The vacuum was restarted and maintained at 0.05 mm for 1 hour at a temperature of 162.3°C. The vacuum was relieved under N₂ and a sample was taken for %NCO. 0.225 grams of a catalyst⁷ and 2.25 grams of a stabilizer⁸ were then added and the vacuum restarted. The %NCO was found to be 1.950. The reaction was maintained at a temperature of 168.4°C for an additional 45 minutes. The vacuum was relieved under N₂ and a viscous, clear liquid was poured into 6 Pam aluminum caulking tubes for later use. The viscosity was measured using a Brookfield viscometer equipped with a thermocell using a #27 spindle at 177°C (350°F) and found to be 8,800 cps.

### Example 3

To a 3L resin flask equipped with a stainless steel 3 blade agitator, Trubore bearing, thermocouple and a Firestone purge valve set up to vacuum and nitrogen the following ingredients were charged: 687.51 grams of an amorphous polyesters ¹(.0700 eq.), 138.71 grams of a crystalline polyester ² (.0200 eq.), and 611.85 grams of a polyether ⁹ (.7100eq.). The 138.71 grams of a secondary aromatic diamine ⁴ (0.2000eq.), 12.15 grams of a antioxidant blend⁵ were now added at room temperature. The resin flask was agitated while being heated and purged with dry nitrogen. The flask was heated to 119.7 °C under a vacuum of .01mm and maintained under vacuum for 1 hour after being flushed several times with dry nitrogen through the use of a Firestone valve. After 1 hour, the vacuum was relieved under N₂ and 611.85 grams of a diisocyanate⁶ (1.3000eq.) were added as a melt. An immediate exotherm was observed with the reaction temperature increasing from 116.7°C to 172.0°C in a time period of 28 minutes. The vacuum was restarted and maintained at 0.05mm for 1 hour at a temperature of 172.0°C. The vacuum was relieved under N₂ and a sample was taken for %NCO. 0.225 grams of a catalyst⁷ and 2.25 grams of a stabilizer⁸ were then added and the vacuum restarted. The %NCO was found to be 1.950. The reaction was maintained at a temperature of 172.0 °C for an additional 45 minutes. The vacuum was relieved under N₂ and a viscous, clear, yellow, liquid was poured into 6 Pam aluminum caulking tubes for later use. The viscosity was measured using a Brookfield viscometer equipped with a thermocell using a #27 spindle at 177°C (350° F) and found to be 10,000cps.

### Comparison 4

To a 3L resin flask equipped with a stainless steel 3 blade agitator, Trubore bearing, thermocouple and a Firestone purge valve set up to vacuum and nitrogen the following ingredients were charged: 694.29 grams of an amorphous polyester ¹(.0700eq.), 137.46 grams of a crystalline polyester² (.0200eq.), and 740.64 grams of a polylactone ³ (.09100eq.). 12.15 grams of an antioxidant blend⁵ were now added at room temperature. The resin flask was agitated and purged while being heated and purged with dry nitrogen. The flask was heated to 120.5°C under vacuum of 0.10mm and maintained under a vacuum for 1 hour after being flushed several times with dry nitrogen through the use of the Firestone valve. After 1 hour, the vacuum was relieved under N₂ and 663.95 grams of a diisocyanate⁶ (1.3000eq.) were added as a melt. An immediate exotherm was observed with the temperature increasing from 119°C to 166.5°C in a time period of 12 minutes. The vacuum was restarted and maintained at 0.20mm for 1 hour at a temperature of 162.6°C. The vacuum was relieved under N₂ and a sample was taken for %NCO. 0.225 grams of a catalyst⁷ and 2.25 grams of a stabilizer⁸ were then added and the vacuum restarted. The %NCO was found to be 1.813. The reaction was maintained at a temperature of 173.7C for additional 45 minutes. The vacuum was relieved under N₂ and the viscous, clear liquid was poured into 5 Pam aluminum tubes and one half pint can for later use. The viscosity was measured using a Brookfield viscometer equipped with a thermocell using a # 27 spindle at 177°C (350°F) and found to be 22,100cps.

### Example 5

To a 3L resin flask equipped with a stainless steel 3 blade agitator, Trubore bearing, thermocouple and a Firestone purge valve set up to vacuum and nitrogen the following ingredients were charged: 623.20 grams of an amorphous polyester ¹(.0700eq.), 215.93 grams of a crystalline polyester² (.0200eq.), 574.50 grams of a polylactone ³(.07100eq.). The 28.53 grams of PolyG®HQEE¹⁰ (.0700eq.), 53.67 grams of HER-HP¹¹ (.1300eq.), and 12.15 grams of antioxidant blend⁵ were now added at room temperature. The resin flask was agitated while being heated and purged with dry nitrogen. The flask was heated to 125.3°C under vacuum of .01mm and maintained under a vacuum for 1 hour after being flushed several times with dry nitrogen through the use of the Firestone valve. After approximately 1 hour, the vacuum was relieved under N₂ and 660.08 grams of a diisocyanate ⁶ (1.3000eq.) were added as a melt. An immediate exotherm was observed with the temperature increasing from 117.8°C to 168.0°C in a time period of 11 minutes. The vacuum was restarted and maintained at 0.10mm for 1 hour at a temperature of 181.0°C. The vacuum was relieved under N₂ and a sample was taken for %NCO. 0.225 grams of a catalyst⁷ and 2.25 grams of a stabilizer⁸ were then added and the vacuum restarted. The %NCO was found to be 1.981. The reaction was maintained at a temperature of 178.3°C and a vacuum of .10mm for an additional 45 minutes. The vacuum was relieved under N₂ and the viscous, opaque, white liquid was poured into 5 Pam aluminum caulking tubes for later use. The viscosity was measured using a Brookfield viscometer equipped with a thermocell using a # 27 spindle at 177°C (350°F) and found to be 26,950cps.

**Table 1**

| Examples and Comparisons | | | | | | |
|---|---|---|---|---|---|---|
| | *Ingredients*/*Measured Property* | Example 1 | Comparison 2 | Example 3 | Comparison 4 | Example 5 (Reference) |
| 1 | Rucoflex™ XS-6012P-22 | 0,0700 | 0.0700 | 0.0700 | 0.0700 | 0.0700 |
| 2 | Rucoflex™ S-1074-30 | 0.0200 | 0.0200 | 0.0200 | 0.0200 | 0.0200 |
| 3 | Capa™ 2043 | 0.7100 | - | | 0.9100 | 0.7100 |
| 9 | PolyG® 20-265 | - | 0.9100 | 0.7100 | - | - |
| 4 | Unilink™ 4200 | 0.2000 | - | 0.2000 | - | - |
| 10 | PolyG® HQEE | - | - | - | - | 0.0700 |
| 11 | HER - HP | - | - | - | - | 0.1300 |
| 5 | Irganox™ B225 | 0.54% | 0.54% | 0.54% | 0.54% | 0.54% |
| 6 | Mondur™ M | 1.3000 | 1.3000 | 1.3000 | 1.3000 | 1.3000 |
| 7 | Fomrez™ UL-1 | 0.01% | 0.01% | 0.01% | 0.01% | 0.01% |
| 8 | PTSI | 0.1% | 0.1% | 0.1% | 0.1% | 0.1% |
| | | | | | | |
| | %NCO (actual) | 2.065 | 1.950 | 1.995 | 1.813 | 1.981 |
| | Viscosity cps. @ 350°F(177°C) | 17,900 | 8,800 | 10,000 | 22,100 | 26,950 |
| | Creep (mm) | 1.75 | 10.0 | 2.25 | 13.25 | 3.50 |
| | 1 minute Nm⁻¹ (pli) | 2119.1 | 1050.8 | 2416.7 | 280.2 | 1838.8 |
| | | (12.1) | (6.0) | (13.8) | (1.6) | (10.5) |
| | 5 minute Nm⁻¹ (pli) | 3432.5 | 2189.1 | 3432.5 | 1698.7 | 2889.6 |
| | | (19.6) | (12.5) | (19.6) | (9.7) | (16.5) |
| | Appearance of Melt | translucent | clear | clear | clear | white, opaque |

All amounts are in equivalents except ingredients Nos. 5, 7 and 8 which are in % by weight, based on the total weight of the adhesive composition.
- Example #1: Formulation similar to Formulation according to Comparison 4 but with Unilink 4200. Note increase in strength and lower creep values over Comparison 4.
- Comparison #2: Formulation according to Henkel Pat. Nos. 5,599,895 & 6,136,136
- Example #3: Formulation similar to Comparison 2 using a 400 molecular weight polyoxypropylene glycol and Unilink™ 4200 aromatic secondary diamine. Note improvement in both strength and lower creep values.
- Comparison #4: Formulation similar to Comparison 2 and Example 3 without Unilink or Aromatic Diol but with CAPA diol. Note raise in creep value.
- Example #5: Formulation similar to Comparison 4 but with blend of Aromatic diol chain extenders. Note increase in strength and lower creep value.

### Green Strength Test: QC-0220

### 1.0 Scope:

This test method described below was used to determine the green strength of adhesives or primer/adhesive combinations as a function of time.

### 2.0 Definition of Terms:

1. Green Strength - The adhesion peel strength of an adhesive measured within a specified amount of time after the assembly of the bond.
2. Chlorination - The use of UPACO 3212 or 3213 on a rubber substrate chlorinates the rubber to allow adhesion.

### 3.0 Equipment / Materials:

1. Biltrite 6X gumtread #87 crinkle rubber soling (part#5522210621 available from QB Soling) cut into 2.5x12.7cm (1"x5") strips
2. One Pam aluminium chalking tube used to retain of the adhesive to be tested.
3. UPACO 3213 2% Trichloroisocyanuric Acid (CAS#87-90-1) in ethyl acetate (CAS#141-78-6)
4. UPACO 3249 urethane primer - 10% Thermoplastic polyurethane solution in solvent blend of acetone (CAS#67-64-1) methyl ethyl ketone (CAS#78-93-3) and toluene (CAS#108-88-3).
5. Stop watch capable of at least one-second accuracy
6. Rotary wire wheel rougher
7. Flash activator by Compo Industries or suitable equivalent.
8. Knight air activated Press.
9. USM "clicker" die press.
10. Scott shoe pull tester.
11. Acid brushes
12. 113g (4 oz) glass jar
13. Pam 500K hot melt application gun (available from Pam Fastening Technology Inc.
14. Desiccator filled with Drierite crystals, 8 mesh with indicator CaSO₄ (CAS#7778-18-9)

### 4.0 Procedure:

1. Cut the #87 crinkle rubber soling into 2.5x12.7cm (1"x5") strips using the "clicker" and appropriate die
2. Using the rotary wheel rougher, rough (scour) the smooth side of the 2.5x12.7cm (1"x5") strips of rubber to remove the outer layer of rubber, use compressed air to blow any loose particles off the strips.
3. Chlorinate the rubber strips by taking a new 113g (4 oz) glass jar, pour fresh UPACO 3213 into the jar, then re-seal the container of UPACO 3213. Using a new acid brush, coat the freshly roughed surface of the rubber strips with the UPACO 3213. Allow 15 minutes to dry.
4. Prime the strips with a new acid brush by coating the freshly chlorinated rubber strips with UPACO 3249 urethane primer. Allow 30 minutes to dry.
5. Primed strips prepared by steps 1-4 may be stored ahead of time for future use. Place in a plastic bag and mark the date of preparation and initial the bag.
6. Take 10 primed strips; mark the date made and initials on the formula
7. Pre-Heat the Pam 500K gun to the pre-set temperature of 191°C (375°F). Remove the purge cartridge, insert the adhesive retained in Pam aluminum caulking tube, but do not close gun for 15 minutes, then seal gun. Run gun until adhesive flows freely.
8. Coat the primed strips with the adhesive to be tested, target for a coating weight of approx 0.7 gms per strip. Allow 2.54cm (1") of uncoated area on the top of each strip, and coat 5 strips total. Gather the strips into 5 pairs, one coated, one primed
9. Place the coated strips in a Desiccator containing Drierite crystals. Allow 30 minutes to cool the strips. The coated strips may be stored for up to 4 hours in the desiccator before testing.
10. Set the flash activator at 15 seconds and the press at 621 kPa (90 psi), and the dwell to 15 seconds, get the stopwatch set to count up in seconds. Press the foot pedal once to activate the unit before proceeding.
11. Take one strip coated with adhesive and one primed strip. Place the coated sample in the wire bin of the flash activator, adhesive side up, then place the primed strip, primer side up, next to it.
12. Press the foot pedal of the flash activator. When the bin reappears, quickly place the strips together, adhesive side to primer side, lining the pieces up as best possible.
13. Place the bond in the press and trigger the two buttons on the side simultaneously. Remove the bond when the press is finished, then start the stopwatch. Quickly proceed to the shoe lab and place the bond in the Scott tester.
14. Begin pulling the strip at 7.6cm (3") min as marked on the speed control. While watching the stopwatch, record the dial reading at 1 minute. Stop the motor on the Scott tester and wait until 3 min 30 seconds on the stopwatch.
15. Start the motor again, while watching the stopwatch, record the dial reading at 5 minutes.

### 5.0 Evaluation:

1. Record each 1-minute and 5 minute reading for each strip on the batch sheet
2. Calculate the average of all 5 readings for both the 1-minute and 5-minute readings, then record the averages on the batch sheet.
3. Collect all the test strips and store them in a bag with the number and lot # of the adhesive tested.

### Creep Test

1. Samples are prepared as described in the Green Strength Test: QC-220. Only five samples are prepared following Steps 1-8 under Procedure. These samples are allowed to condition at room temperature and ambient humidity for approximately 30 minutes.
2. Five additional samples are die cut 2.5 x 12.7cm (1" x 5") using the "clicker" and coded fabric designation "Brite White Profile 1" supplied by Majilite Corporation, Dracut, MA. This is a polyurethane coated fabric.
3. Scotch Magic Tape 810, 2.54 cm (1") wide is applied to one end of the 2.5cmx12.7cm (1" x 5") Profile to mask the end and trimmed so there is no overlap.
4. A small hole is punched in the center of the taped masked area.
5. The flash activator is set at 11 seconds and the press at 621 kPa (90 psi), and the dwell to 15 seconds. Press the foot pedal once to activate the unit before proceeding.
6. Take one coated sample and one masked and punched Profile strip and place them in the wire bin of the flash activator, adhesives side up and Profile side up.
7. Press the foot pedal of the flash activator. When the bin reappears, quickly place the strips together (activated sides together), lining the pieces up as best possible.
8. Place the bond in the press and trigger the two buttons on the side simultaneously. Remove the bond when the press is finished.
9. Separate the bonded sample at the taped end and mark the bond line with a colored pen. Suspend a 500 gram weight from the Profile punched hole.
10. Hang the sample with the weight in a horizontal plane such that the weight hangs down in a peel mode. Steps 9 through 10 should be complete within 30 seconds.
11. Allow the samples to hang in the undisturbed position for at least 30 minutes.
12. Remove the samples after the 30 minute dwell time. Mark the amount of creep using a colored pen.
13. Measure the distance between the two colored pen lines and report the value in millimeters.
14. Report the average of four determinations for each adhesive tested.

## Claims

1. An uncured, moisture-curing, hot-melt polyurethane adhesive composition, the composition being the reaction product of reactants comprising:
a hydroxyl-containing component selected from one or more polylactones, one or more polyether polyols, or combinations thereof in an amount within the range of between 50% to 10% by weight;
a secondary aromatic diamine chain extender in an amount within the range of 15% to 1% by weight;
a crystalline polyester in an amount within the range of 30% to 5% by weight;
an amorphous polyester in an amount within the range of 50% to 10% by weight; and
an isocyanate present in an amount within the range of 40% to 10% by weight, based on the total weight of the composition.

2. An adhesive composition according to claim 1 wherein the polylactone is a low molecular weight polylactone.

3. An adhesive composition according to claim 2 wherein the polylactone is a caprolactone.

4. A moisture-curing hot-melt polyurethane adhesive according to claim 3, the adhesive being the reaction product of the reactants comprising:
a low molecular weight caprolactone in an amount of 25.0% weight;
a crystalline polyester in an amount of 15.0% weight;
an amorphous polyester in an amount of 25.0% weight;
a secondary aromatic diamine in an amount of 5.0% weight; and
an isocyanate present in the adhesive composition in an amount of 30.0% weight, based on the total weight of the adhesive composition.

5. An adhesive composition according to any preceding claim wherein the isocyanate is selected from aromatic polyisocyanate, 4,4'-diphenylmethane diisocyanate, 2,4'-diphenylmethane diisocyanate and mixtures, toluene diisocyanate and aliphatic and cycloaliphatic polyisocyanates.

6. An adhesive composition according to any preceding claim wherein the hydroxyl-containing component is a polyether selected from polyethylene glycol, polytetramethylene glycol, poly (oxypropylene) glycol and polypropylene glycol.

7. The adhesive composition of any preceding claim wherein the secondary aromatic diamine is selected from 4,4'bis(sec-butylamino)-diphenylmethane, N,N'-di-sec-butyl-p-phenylenediamine and N,N'-bis-(1,4-dimethylpentyl)-p-phenylenediamine.

8. An adhesive composition according to any preceding claim which exhibits a green peel strength of at least 876 N/m (5 pli) @ 1 minute and 2101 N/m @ 5 minutes when tested in accordance with QC-0220.

9. An article of manufacture comprising a shoe upper and a shoe sole bonded together with an adhesive comprising the composition of any preceding claim.

10. A method of producing a moisture-curing hot-melt polyurethane adhesive composition according to any one of claims 1 to 8 comprising the steps of:
heating a hydroxyl-containing component selected from the group consisting of one or more polylactones, one or more polyether polyols, or combinations thereof; a crystalline polyester; an amorphous polyester; and a secondary aromatic diamine chain extender to form a mixture;
and reacting a polyisocyanate with the mixture to produce the adhesive composition, the adhesive composition exhibiting a green peel strength of at least 876 N/m (5 pli) @ 1 minute and at least 2102 N/m (12 pli) @ 5 minutes when tested in accordance with QC-0220.

11. A method according to claim 10 wherein the heating step comprises admixing the hydroxyl-compound in an amount of from 50.0% by weight to 10.0% by weight; the secondary aromatic diamine chain extender in an amount of from 1.0% by weight to 15.0% by weight; the crystalline polyester in an amount of from 30.0% by weight to 5.0% by weight; and the amorphous polyester in an amount of from 50.0% by weight to 10.0% by weight and reacting the isocyanate in an amount from 40% by weight to 10% by weight with the mixture, the weights being based on the total weight of the adhesive composition.

12. A method for bonding a first substrate to a second substrate comprising the steps of:
optionally, treating at least a portion of the first substrate to form a treated substrate;
heating an adhesive composition according to any one of claims 1 to 8;
coating at least a portion of the treated substrate with the molten adhesive to form a coated substrate;
optionally, heating the coated substrate; and
contacting the coated substrate with the second substrate to bond the first substrate to the second substrate.

13. A method according to claim 12 wherein the treating step comprises roughing, priming, chlorinating or solvent washing.

14. A method according to claim 12 or claim 13 wherein the contacting step comprises pressing.

15. A method according to any one of claims 12 to 14 wherein the first substrate is leather or synthetic fabric.

16. A method according to any one of claims 12 to 15 wherein the second substrate is leather or natural or synthetic rubber.

17. A method according to any one of claims 12 to 16 wherein the first substrate is a shoe upper.

18. A method according to any one of claims 12 to 17 wherein the second substrate is a shoe sole.

## Patentansprüche

1. Ungehärtete, feuchtigkeitshärtende Polyurethan-Heißschmelzkleberzusatimensetzung, wobei es sich bei der Zusammensetzung um das Reaktionsprodukt von Reaktanten handelt, die folgendes umfassen:
eine hydroxylhaltige Komponente, ausgewählt aus einem oder mehreren Polylactonen, einem oder mehreren Polyetherpolyolen oder Kombinationen davon in einer Menge im Bereich von 50 bis 10 Gew.-%;
ein Kettenverlängerungsmittel in Form eines sekundären aromatischen Diamins in einer Menge im Bereich von 15 bis 1 Gew.-%;
einen kristallinen Polyester in einer Menge im Bereich von 30 bis 5 Gew.-%
einen amorphen Polyester in einer Menge im Bereich von 50 bis 10 Gew.-%; und
ein Isocyanat, das in einer Menge im Bereich von 40 bis 10 Gew.-% vorliegt, bezogen auf das Gesamtgewicht der Zusammensetzung.

2. Klebstoffzusammensetzung nach Anspruch 1, wobei es sich beim Polylacton um ein Polylacton von geringem Molekulargewicht handelt.

3. Klebstoffzusammensetzung nach Anspruch 2, wobei es sich beim Polylacton um Caprolacton handelt.

4. Feuchtigkeitshärtender Polyurethan-Heißschmelzklebstoff nach Anspruch 3, wobei es sich bei dem Klebstoff um das Reaktionsprodukt von Reaktanten handelt, die folgendes umfassen:
ein niedermolekulares Caprolacton in einer Menge von 25,0 Gew.-%;
einen kristallinen Polyester in einer Menge von 15,0 Gew.-%;
einen amorphen Polyester in einer Menge von 25,0 Gew.-%;
ein sekundäres aromatisches Diamin in einer Menge von 5,0 Gew.-%; und
ein Isocyanat, das in der Klebstoffzusammensetzung in einer Menge von 30,0 Gew.-% enthalten ist, bezogen auf das Gesamtgewicht der Klebstoffzusammensetzung.

5. Klebstoffzusammensetzung nach einem der vorstehenden Ansprüche, wobei das Isocyanat aus einem aromatischen Polyisocyanat, 4,4'-Diphenylmethandiisocyanat, 2,4'-Diphenylmethandiisocyanat und Gemischen davon, Toluoldiisocyanat und aliphatischen und cycloaliphatischen Polyisocyanaten ausgewählt ist.

6. Klebstoffzusammensetzung nach einem der vorstehenden Ansprüche, wobei es sich bei der hydroxylhaltigen Komponente um einen Polyether handelt, der aus Polyethylenglycol, Polytetramethylenglycol, Poly-(oxypropylen)-glycol und Polypropylenglycol ausgewählt ist.

7. Klebstoffzusammensetzung nach einem der vorstehenden Ansprüche, wobei das sekundäre aromatische Diamin aus 4,4'-Bis-(sec.-Butylamino)-diphenylmethan, N,N'-Di-sec.-butyl-p-phenyleadiamin und N,N'-Bis-(1,4-dimethylpentyl)-p-phenylendiamin ausgewählt ist.

8. Klebstoffzusammensetzung nach einem der vorstehenden Ansprüche, die bei Test gemäß QC-0220 eine Grün-Schälfestigkeit von mindestens 876 N/m (5 pli) nach 1 Minute und von 2101 N/m nach 5 Minuten aufweist.

9. Fertigungsgegenstand, umfassend einen Schuhschaft und eine Schuhsohle, die miteinander mit einem Klebstoff, der die Zusammensetzung nach einem der vorstehenden Ansprüche umfasst, verklebt sind.

10. Verfahren zur Herstellung einer feuchtigkeitshärtenden Polyurethan-Heißschmelzkleberzusammensetzung nach einem der Ansprüche 1 bis 6, umfassend die folgenden Stufen:
Erwärmen einer hydroxylhaltigen Komponente, die aus der Gruppe ausgewählt ist, die aus einem oder mehreren Polylactonen, einem oder mehreren Polyetherpolyolen oder Kombinationen davon ausgewählt ist; eines kristallinen Polyesters; eines amorphen Polyesters; und eines Kettenerweiterungsmittels auf der Basis eines sekundären aromatischen Diamins, unter Bildung eines Gemisches;
und Umsetzen eines Polyisocyanats mit dem Gemisch zur Bildung der Klebstoffzusammensetzung, wobei die Klebstoffzusammensetzung bei Test gemäß QC-0220 eine Grun-SchälEestigkeit von mindestens 876 N/m (5 pli) nach 1 Minute und von mindestens 2102 N/m (12 pli) nach 5 Minuten aufweist.

11. Verfahren nach Anspruch 10, wobei die Erwärmungsstufe das Vermischen der Hydroxylverbindung in einer Menge von 50,0 bis 10,0 Gow.-%; des Kettenerweiterungsmittels auf der Basis eines sekundären aromatischen Amins in einer Menge von 1,0 bis 15,0 Gew.-%; des kristallinen Polyesters in einer Menge von 30,0 bis 5,0 Gew.-%; und des amorphen Polyesters in einer Menge von 50,0 bis 10,0 Gew.-% und das Umsetzen des Isocyanats in einer Menge von 40 bis 10 Gew.-% mit dem Gemisch umfasst, wobei die Gewichtsangaben sich auf das Gesamtgewicht der Klebstoffzusammensetzung beziehen.

12. Verfahren zum Verkleben eines ersten Substrats mit einem zweiten Substrat, umfassend die folgenden Stufen:
gegebenenfalls das Behandeln mindestens eines Teils das ersten Substrats unter Bildung eines behandelten Substrats;
das Erwärmen einer Klebstoffzusammensetzung nach einem der Ansprüche 1 bis 8;
das Beschichten mindestens eines Teils des behandelten Substrats mit dem geschmolzenen Klebstoff unter Bildung eines beschichteten Substrats;
gegebenenfalls das Erwärmen des beschichteten Substrats; und
das Kontaktieren des beschichteten Substrats mit dem zweiten Substrat zum Verkleben des ersten Substrats mit dem zweiten Substrat.

13. Verfahren nach Anspruch 12, wobei die Behandlungsstufe das Aufrauhen, Grundieren, Chlorieren oder Waschen mit einem Lösungsmittel umfasst.

14. Verfahren nach Anspruch 12 oder 13, wobei die Kontaktierungsstufe das Pressen umfasst.

15. Verfahren nach einem der Ansprüche 12 bis 14, wobei es sich beim ersten Substrat um Leder oder um einen synthetischen textilen Werkstoff handelt.

16. Verfahren nach einem der Ansprüche 12 bis 15, wobei es sich beim zweiten Substrat um Leder oder um natürlichen oder synthetischen Kautschuk handelt.

17. Verfahren nach einem der Ansprüche 12 bis 16, wobei es sich beim ersten Substrat um einen Schuhschaft handelt.

18. Verfahren nach einem der Ansprüche 12 bis 17, wobei es sich beim zweiten Substrat um eine Schuhsohle handelt.

## Revendications

1. Composition adhésive à base de polyuréthane thermofusible durcissant à l'humidité, non durcie, la composition étant le produit de la réaction de réactifs comprenant :
un composant hydroxylé choisi parmi une ou plusieurs polylactones, un ou plusieurs polyéther-polyols, ou leurs combinaisons, en une quantité située dans la plage comprise entre 50 % et 10 % en poids ;
un agent d'allongement de chaîne de type diamine aromatique secondaire en une quantité située dans la plage allant de 15 % à 1 % en poids ;
un polyester cristallin en une quantité située dans la plage allant de 30 % à 5 % en poids ;
un polyester amorphe en une quantité située dans la plage allant de 50 % à 10 % en poids ; et
un isocyanate présent en une quantité située dans la plage allant de 40 % à 10 % en poids, par rapport au poids total de la composition.

2. Composition adhésive selon la revendication 1, dans laquelle la polylactone est une polylactone de faible masse moléculaire.

3. Composition adhésive selon la revendication 2, dans laquelle la polylactone est une caprolactone.

4. Adhésif à base de polyuréthane thermofusible durcissant à l'humidité selon la revendication 3, l'adhésif étant le produit de la réaction de réactifs comprenant :
une caprolactone de faible masse moléculaire en une quantité de 25,0 % en poids ;
un polyester cristallin en une quantité de 15,0 % en poids ;
un polyester amorphe en une quantité de 25,0 % en poids ;
une diamine aromatique secondaire en une quantité de 5,0 % en poids ; et
un isocyanate présent dans la composition adhésive en une quantité de 30,0 % en poids, par rapport au poids total de la composition adhésive.

5. Composition adhésive selon l'une quelconque des revendications précédentes, dans laquelle l'isocyanate est choisi parmi un polyisocyanate aromatique, le diisocyanate de 4,4'-diphénylméthane, le diisocyanate de 2,4'-diphénylméthane et leurs mélanges, le diisocyanate de toluène et les polyisocyanates aliphatiques et cycloaliphatiques.

6. Composition adhésive selon l'une quelconque des revendications précédentes, dans laquelle le composant hydroxylé est un polyéther choisi parmi le polyéthylèneglycol, le polytétraméthylèneglycol, le polyoxypropylèneglycol et le polypropylèneglycol.

7. Composition adhésive selon l'une quelconque des revendications précédentes, dans laquelle la diamine aromatique secondaire est choisie parmi le 4,4'-bis(sec-butylamino)diphénylméthane, la N,N'-di-sec-butyl-p-phénylènediamine et la N,N'-bis(1,4-diméthylpentyl)-p-phénylènediamine.

8. Composition adhésive selon l'une quelconque des revendications précédentes, qui présente une résistance au pelage à cru d'au moins 876 N/m (5 pli) à 1 minute et de 2101 N/m à 5 minutes quand on la teste conformément à la norme QC-0220.

9. Article manufacturé comprenant une tige et une semelle collées ensemble avec un adhésif comprenant la composition de l'une quelconque des revendications précédentes.

10. Procédé pour produire une composition adhésive à base de polyuréthane thermofusible durcissant à l'humidité selon l'une quelconque des revendications 1 à 8, comprenant les étapes suivantes :
chauffer un composant hydroxylé choisi dans le groupe constitué par une ou plusieurs polylactones, un ou plusieurs polyéther-polyols, ou leurs combinaisons ; un polyester cristallin ; un polyester amorphe ; et un agent d'allongement de chaîne de type diamine aromatique secondaire pour former un mélange ;
et faire réagir un polyisocyanate avec le mélange pour produire la composition adhésive, la composition adhésive présentant une résistance au pelage à cru d'au moins 876 N/m (5 pli) à 1 minute et de 2102 N/m (12 pli) à 5 minutes quand on la teste conformément à la norme QC-0220.

11. Procédé selon la revendication 10, dans lequel l'étape de chauffage comprend le mélange du composé hydroxylé en une quantité de 50,0 % en poids à 10,0 % en poids ; de l'agent d'allongement de chaîne de type diamine aromatique secondaire en une quantité de 1,0 % en poids à 15,0 % en poids ; du polyester cristallin en une quantité de 30,0 % en poids à 5,0 % en poids ; et du polyester amorphe en une quantité de 50,0 % en poids à 10,0 % en poids, et la réaction de l'isocyanate en une quantité de 40 % en poids à 10 % en poids avec le mélange, les poids se rapportant au poids total de la composition adhésive.

12. Procédé pour coller un premier substrat à un deuxième substrat, comprenant les étapes suivantes :
éventuellement traiter au moins une partie du premier substrat pour former un substrat traité ;
chauffer une composition adhésive selon l'une quelconque des revendications 1 à 8 ;
revêtir au moins une partie du substrat traité avec l'adhésif fondu pour former un substrat revêtu ;
éventuellement chauffer le substrat revêtu ; et
mettre en contact le substrat revêtu avec le deuxième substrat pour coller le premier substrat au deuxième substrat.

13. Procédé selon la revendication 12, dans lequel l'étape de traitement comprend un cardage, un apprêtage, une chloration ou un lavage au solvant.

14. Procédé selon la revendication 12 ou la revendication 13, dans lequel l'étape de mise en contact comprend un pressage.

15. Procédé selon l'une quelconque des revendications 12 à 14, dans lequel le premier substrat est en cuir ou en tissu synthétique.

16. Procédé selon l'une quelconque des revendications 12 à 15, dans lequel le deuxième substrat est en cuir ou en caoutchouc naturel ou synthétique.

17. Procédé selon l'une quelconque des revendications 12 à 16, dans lequel le premier substrat est une tige.

18. Procédé selon l'une quelconque des revendications 12 à 17, dans lequel le deuxième substrat est une semelle.
